## Europäisches Patentamt

## European Patent Office

## Office européen des brevets

(19)

(11) Publication number: **0 288 626 B1**

(12) **EUROPEAN PATENT SPECIFICATION**

(45) Date of publication of the patent specification: 05.09.90

(51) Int. Cl.⁵: **B22D 11/06**, B29C 33/36

(21) Application number: 87303845.9

(22) Date of filing: 29.04.87

(54) Continuous casting installations.

(43) Date of publication of application: 02.11.88 Bulletin 88/44

(45) Publication of the grant of the patent: 05.09.90 Bulletin 90/36

(84) Designated Contracting States: DE FR GB IT

(56) References cited:
EP-A- 0 174 922

PATENT ABSTRACTS OF JAPAN, vol. 10, no. 142 (M-481)[2199], 24th May 1986; & JP-A-61 1451 (ISHIKAWAJIMA HARIMA JUKOGYO K.K.) 07-01-1986
PATENT ABSTRACTS OF JAPAN, vol. 8, no. 276 (M-346)[1713], 18th December 1984; & JP-A-59 147 748 (ISHIKAWAJIMA HARIMA JUKOGYO K.K.) 24-08-1984

(73) Proprietor: ISHIKAWAJIMA-HARIMA JUKOGYO KABUSHIKI KAISHA, 2-1, Ote-machi 2-chome, Chiyoda-ku Tokyo 100(JP)
Proprietor: NIPPON KOKAN KABUSHIKI KAISHA, 1-2 Marunouchi 1-chome Chiyoda-ku, Tokyo 100(JP)

(72) Inventor: Dazai, Hiroshi, No.110-136, Katabuki Kanazawa-ku, Yokohama-shi Kanagawa-ken(JP)
Inventor: Tsuchida, Yutaka, No.3-64-13, Kamoi, Yokosuka-shi Kanagawa-ken(JP)
Inventor: Takahashi, Shuzo, No.6-1-8-504, Konandai Konan-ku, Yokohama-shi Kanagawa-ken(JP)
Inventor: Hasebe, Nobuhisa, No.2703-9, Iijima-cho Sakae-ku, Yokohama-shi Kanagawa-ken(JP)
Inventor: Sako, Katsuyuki, No.5-4-17, Fujisawa, Fujisawa-shi Kanagawa-ken(JP)

(74) Representative: Rees, David Christopher et al, Kilburn & Strode 30 John Street, London WC1N 2DD(GB)

## Description

The present invention relates to continuous casting installations of endless track type and is concerned with that sort of such installation which comprises a plurality of mould blocks connected together in two endless tracks, the two tracks having runs which are disposed in opposed relationship, each mould block being of generally L-shaped cross-section of which each limb cooperates and forms a seal with a limb of an associated mould block in the other track when the two said mould blocks are in the cooperating runs, whereby the mould blocks in the said runs define a mould cavity into which, in use, molten metal is poured whilst the mould blocks are moved in the same direction.

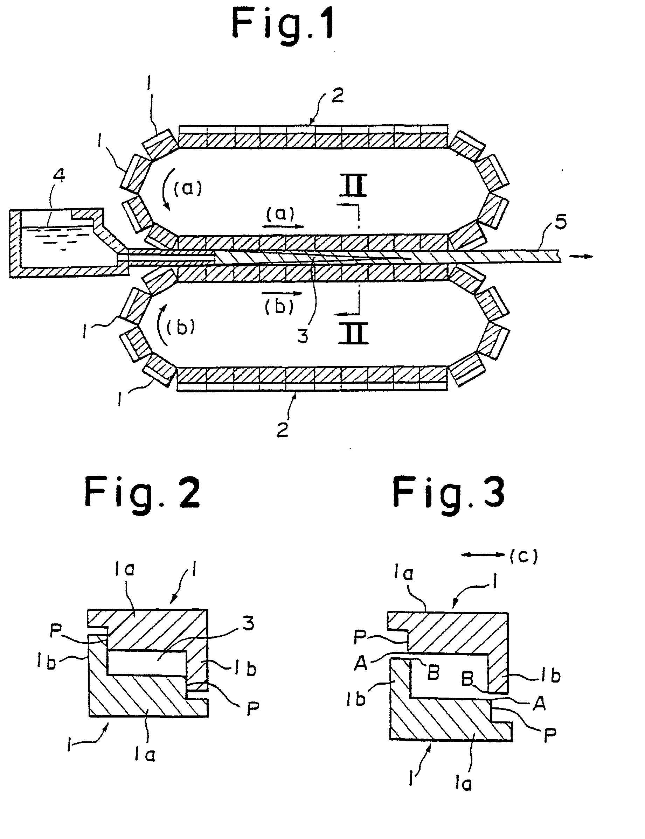

A typical example of known endless track continuous casting installations is shown in Figures 1 and 2 which are a diagrammatic side elevation of the installation and a transverse sectional view of two mould blocks, respectively. This installation comprises a plurality of mould blocks 1 of generally L-shaped cross-section and which are interconnected in the form of two continuous loops or tracks 2 one above the other. The lower run of the upper track and the upper run of the lower track extend horizontally parallel to one another. The mould blocks 1 comprise two limbs 1a and 1b and, as seen in Figure 2, are so configured that each associated pair defines a mould cavity 3 with the thicker limbs 1a defining the top and bottom of the cavity and the thinner limbs 1b defining the side walls of the cavity. The side surface of the end of each limb 1b slidably engages a shoulder P at the end of the limb 1a of the other mould block and a gap is defined between the end surface of each limb 1b and the associated limb 1a whereby the depth of the mould cavity 3 may be altered by sliding the mould blocks 1 towards and away from one another whilst maintaining the cavity sealed. The mould cavities of adjacent associated pairs of mould blocks communicate whereby a continuous mould cavity is defined between the two tracks 2.

In use, the two tracks are driven so that the two adjacent runs move in the same direction as indicated by the arrows (a) and (b). Molten metal 4 is poured into the mould cavity 3 through one open end thereof and the casting 5 is withdrawn from the other open end.

In the installation described above, the mould cavity 3 is initially defined by the following steps: Firstly, the mould blocks 1 of the upper track 2 are lowered and those of the lower track 2 are raised, so that the mould blocks to be associated gradually approach each other and start to overlap one another. As the blocks are moved further, the surfaces P of the limbs 1a are brought into engagement and sealing contact with the inner surfaces of the side limbs 1b, whereby the rectangular mould cavity 3 is defined by the four limbs 1a, 1b, 1a and 1b.

When two mould blocks to be associated are misaligned in the direction indicated by the double headed arrow c in Figure 3, which is a view similar to Figure 2, the corners A of the limbs 1a collide with the corners B of the side limbs 1b, whereby the desired smooth sealing contact is not obtained and the mould blocks are subjected to an increased rate of wear. To overcome this problem, the associated pairs of mould blocks may be dimensioned so that there is a gap between the end surfaces P of the limbs 1a and the inner surface of the side limbs 1b. However, this produces the further problem that molten metal poured into the mould cavity 3 will leak through these gaps to the exterior.

It is the object of the present invention to provide a continuous casting installation of the type referred to above in which the above problems are eliminated and, in particular, in which the problem of misalignment of the mould blocks of the two tracks does not arise, whereby the mould blocks of an associated pair do not hit and thus damage one another as they are moving together at the beginning of the mould cavity.

According to the present invention a continuous casting installation of the type referred to above is characterised by guide means which guides the associated pairs of mould blocks in the region upstream of the said opposed runs to move relative to one another in a first direction perpendicular to the said runs and a second direction perpendicular to the said runs and to the first direction until they are in contact. Thus in the installation in accordance with the invention the associated pairs of mould blocks are not simply moved in the direction towards one another to define the mould cavity but are also moved in a further direction lateral thereto which enables the corners of the sealing surfaces to move past one another without the risk of hitting one another and the sealing surfaces then to be moved together into sealing engagement.

In one embodiment the guide means is arranged to guide associated pairs of mould blocks in the region upstream of the said runs to move in the first direction until the sealing surfaces of the limbs of the pairs of mould blocks are opposed to one another and then to move in the second direction until the said sealing surfaces are in sealing contact. In the preferred embodiment one limb of each mould block has a recess at one end and when each pair of mould blocks is in sealing engagement the other limb of each mould block is partially received in the recess of the other mould block and its interior side surface forms a sliding seal with the side surface of the recess.

The guide means preferably includes a guide rail associated with one or both endless tracks and the or each guide rail preferably extends not only over the region upstream of the opposed runs but also over the length of the opposed runs and is preferably disposed adjacent the rear surfaces of the block moulds, that is to say within the associated track.

Further features, details and advantages of the present invention will be apparent from the following description of two preferred embodiments thereof which is given with reference to Figures 4 to 9 of the accompanying diagrammatic drawings, in which:

Figure 4 is a diagrammatic side view of a preferred embodiment of the continuous casting installation in accordance with the present invention;

Figure 5 is a scrap transverse sectional view taken on the line V-V in Figure 4;

Figure 6 is a scrap plan view in the direction indicated by the arrows VI in Figure 4 which shows the relative positions of the upper and lower guide rails;

Figure 7 is a side view of the mould blocks seen in Figure 6;

Figures 8(i), 8(ii) and 8(iii) are views similar to Figure 5 which illustrate sequentially the relative positions of an associated pair of mould blocks as they are moved into sealing engagement; and

Figure 9 is a view similar to Figure 5 showing a modified construction of the guides for the mould blocks.

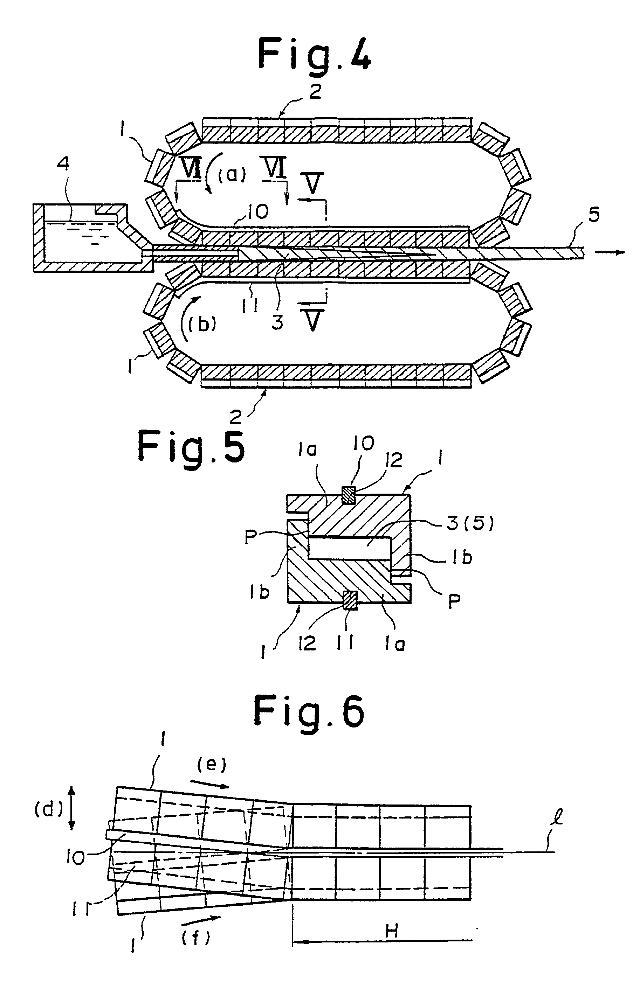

The casting installation shown in Figure 4 is generally similar to that shown in Figure 1 and those elements which are the same in both constructions are designated with the same reference numerals and will not be described again.

The installation shown in Figure 4 differs from that in Figure 1 in that the movement of the mould blocks 1 of the two tracks 2 is guided, at least in the area where the mould blocks of the two tracks approach one another to define the mould cavity 3, by two guide rails 10 and 11. The guide rails 10 and 11 are slidingly received in correspondingly dimensioned grooves 12 formed in the rear surfaces of the mould blocks of the upper and lower tracks, respectively. As the mould blocks are moved around the two tracks the blocks are moved relative to one another by the guide rails in the region in which the blocks approach one another to define the mould cavity both vertically and horizontally, that is to say transverse to the length of the casting 5.

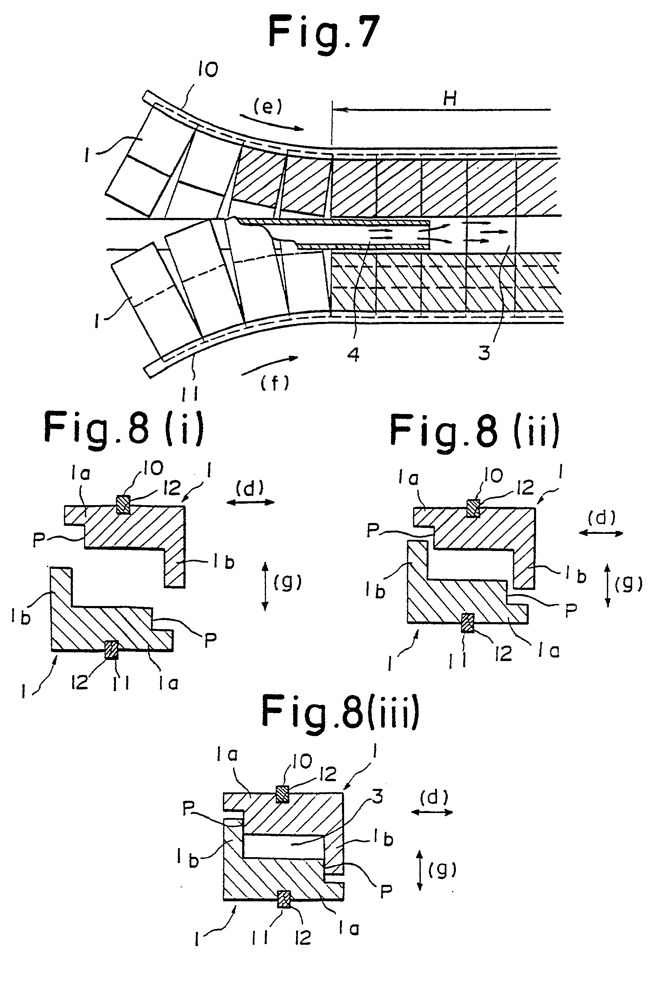

The guide rails 10 and 11 are constructed and arranged as shown in Figures 6 and 7. Thus as the mould blocks of the upper and lower endless tracks 2 approach each other, the upper and lower guide rails 10 and 11 are offset in the widthwise direction of the casting 5, i.e. in the direction indicated by the double headed arrow d in Figure 6. As each associated mould block pair reaches the region in which they start to engage one another, both the guide rails 10 and 11 are directed toward the centre line . In the zone H in which the mould block pairs 1 properly define the mould cavity 3, the guide rails 10 and 11 are disposed vertically above one another. The guide rails 10 and 11 are fixedly or adjustably mounted on the main body (not shown) of the continuous casting installation. In Figures 6 and 7, the directions of movement of the upper and lower mould blocks 1 in the region in which they approach one another are indicated by the arrows e and f, respectively.

In the region in which the mould blocks of the two tracks approach one another the relative positions of an associated pair of mould blocks is shown at three different times in Figures 8(i), 8(ii) and 8(iii). Initially, as shown in Figure 8(i), the upper and lower mould blocks approach each other vertically in the direction indicated by the double headed arrow g as the endless tracks 2 revolve. At this stage the two blocks are offset in opposite directions from the centre line and are thus spaced apart from each other in the direction indicated by the double headed arrow d.

As the blocks move further along the guide rails 10 and 11 the latter converge in the direction d so that the upper and lower mould blocks 1 are caused to approach each other also in the direction d. Thus the mould blocks 1 approach each other both vertically and horizontally, i.e. in the directions d and g. The blocks then reach the position shown in Figure 2 in which the end faces P of the laterally extending limbs 1a of the mould blocks 1 are within, i.e. overlap horizontally with, the vertical limbs 1b of the mated block moulds 1; this state is referred to as "partly engaged". Thus in order to bring the mould blocks into the positions indicated, the shape of the guide rails 10 and 11 must be matched with the revolving positions of the endless tracks 2.

As the mould blocks continue to move along the guide rails 10 and 11 they approach each other in the direction d until the lateral limb 1a of each mould block 1 is brought into contact with the inner surface of the vertical limb 1b of the other block mould 1, whereby a sealed mould cavity 3 is defined which does not permit leakage of molten metal. Since the blocks approach one another both vertically and horizontally destructive engagement of the corners of the sealing surfaces is avoided.

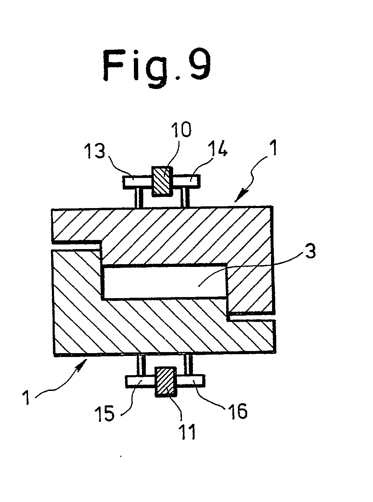

Instead of forming grooves 12 on the mould blocks for receiving the guide rails 10 and 11, guide rolls 13, 14, 15 and 16 may be mounted on the mould blocks, as shown in Figure 9, which engage the side surfaces of the guide rails 10 and 11 and guide the mould blocks.

Whilst both of the upper and lower endless tracks 2 have been described as being provided with guide rails it is of course possible to provide a guide rail only on the upper or lower track.

Whilst the endless tracks 2 have been described as being disposed in vertically opposed relationship, it will be understood that the present invention is not limited to such an arrangement.

## Claims

1. A continuous casting installation of endless track type comprising a plurality of mould blocks connected together in two endless tracks, the two tracks having runs which are disposed in opposed relationship, each mould block being of generally L-shaped cross section of which each limb cooperates and forms a seal with a limb of an associated mould block in the other track when the two said mould blocks are in the cooperating runs whereby the mould blocks in the said runs define a mould cavity into which, in use, molten metal is poured whilst the mould blocks are moved in the same direction characterised by guide means (10, 11, 12) which guides the associated pairs of mould blocks (1) in the region upstream of the said opposed runs to move relative to one another in a first direction (g) perpendicular to the said runs and in a second direction (d) perpendicular to the said runs and to the first direction (g) until they are in contact.

2. An installation as claimed in Claim 2 characterised in that the guide means (10, 11, 12) is arranged to guide associated pairs of mould blocks (1) in the region upstream of the said runs to move in the first direction (g) until the sealing surfaces of the limbs (1a, 1b) of the pairs of mould blocks (1) are opposed to one another and then to move in the second direction (d) until the said sealing surfaces are in sealing contact.

3. An installation as claimed in Claim 1 or Claim 2 characterised in that one limb (1a) of each mould block (1) has a recess at one end and that when each pair of mould blocks (1) is in sealing engagement the other limb (1b) of each mould block (1) is partially received in the recess of the other mould block (1) and its interior side surface forms a sliding seal with the side surface (P) of the recess.

4. An installation as claimed in any one of the preceding claims characterised in that the guide means includes a guide rail (10, 11) associated with one or each endless track (2).

5. An installation as claimed in Claim 4 characterised in that the or each guide rail (10, 11) extends over the said region upstream of the said opposed runs and over the length of the said runs.

6. An installation as claimed in Claim 4 or Claim 5 characterised in that the or each guide rail (10, 11) is disposed within the loop constituted by the associated track (2).

7. An installation as claimed in any one of Claims 4 to 6 characterised in that each mould block (1) of the track or tracks (2) with which a guide rail (10, 11) is associated is provided with a groove (12) which receives the associated guide rail (10, 11).

8. An installation as claimed in any one of Claims 4 to 6 characterised in that each mould block (1) of the track or tracks (2) with which a guide rail (10, 11) is associated is provided with guide rollers (13, 14, 15, 16) which engage the associated guide rail (10, 11).

## Patentansprüche

1. Stranggussanlage des endlosen Bahntyps mit einer Vielzahl Formblöcke, die miteinander in zwei endlosen Bahnen verbunden sind, wobei die beiden Bahnen Verläufe aufweisen, die einander gegenüberliegen, jeder Formblock einen im wesentlichen L-förmigen Querschnitt mit Armen besitzt, von denen jeder mit einem Arm eines zugeordneten Formblocks in der anderen Bahn zusammenwirkt und eine Abdichtung bildet, wenn die beiden Formblöcke sich in den zusammenwirkenden Verläufen befinden, worin die Formblöcke einen Formhohlraum festlegen, in welchen im Betrieb geschmolzenes Metall eingegossen wird, während die Formblöcke in derselben Richtung bewegt werden, gekennzeichnet durch eine Führungseinrichtung (10, 11, 12), welche die einander zugeordneten Paare von Formblöcken (1) im Abschnitt stromaufwärts von den gegenüberliegenden Verläufen führen zur Bewegung der Formblöcke relativ zueinander in einer ersten Richtung (g) senkrecht zu den Verläufen und in einer zweiten Richtung (d) senkrecht zu den Verläufen und zur ersten Richtung (g), bis sie in Kontakt sind.

2. Anlage nach Anspruch 1, dadurch gekennzeichnet, dass die Führungseinrichtung (10, 11, 12) zum Führen einander zugeordneter Paare von Formblöcken (1) in dem Abschnitt stromaufwärts der Verläufe angeordnet ist zum Bewegen der Formblöcke in der ersten Richtung (g) bis die Dichtungsflächen der Arme (1a, 1b) der Paare von Formblöcken (1) einandergegenüberliegen und danach die Formblöcke in der zweiten Richtung (d) zu bewegen, bis die Dichtungsflächen in Abdichtungskontakt sind.

3. Anlage nach Anspruch 1 oder 2, dadurch gekennzeichnet, dass ein Arm (1a) jedes Formblocks (1) an einem Ende eine Ausnehmung aufweist, und dass der andere Arm (1b) jedes Formblocks (1) teilweise in der Ausnehmung des anderen Formblocks (1) aufgenommen ist und seine innere Seitenfläche mit der Seitenfläche (P) der Ausnehmung eine Gleitdichtung bildet, wenn sich jedes Paar von Formblöcken (1) in abdichtendem Eingriff befindet.

4. Anlage nach einem der vorhergehenden Ansprüche, dadurch gekennzeichnet, dass die Führungseinrichtung eine Führungsschiene (10, 11) enthält, die zu einer oder jeder endlosen Bahn endlosen Bahn (2) zugeordnet ist.

5. Anlage nach Anspruch 4, dadurch gekennzeichnet, dass die oder jede Führungsschiene (10, 11) sich über den Abschnitt stromaufwärts von den einander gegenüberliegenden Verläufen und über die Länge der Verläufe erstreckt.

6. Anlage nach Anspruch 4 oder 5, dadurch gekennzeichnet, dass die oder jede Führungsschiene (10, 11) innerhalb der Schleife angeordnet ist, die durch die zugeordnete Bahn gebildet ist.

7. Anlage nach einem der Ansprüche 4 bis 6, dadurch gekennzeichnet, dass jeder Formblock (1) der Bahn oder der Bahnen (2), zu dem eine Führungsschiene (10, 11) zugeordnet ist, mit einer Rille (12) versehen ist, welche die zugeordnete Führungsschiene (10, 11) aufnimmt.

8. Anlage nach einem der Ansprüche 4 bis 6, dadurch gekennzeichnet, dass jeder Formblock (1) der Bahn oder der Bahnen (2), zu dem eine Führungsschiene (10, 11) zugeordnet ist, mit Führungsrollen (13, 14, 15, 16) versehen ist, die an der zugeordneten Führungsschiene (10, 11) angreifen.

## Revendications

1. Installation de coulée continue du type à pistes sans fin, présentant de multiples blocs de moulage reliés les uns aux autres en deux pistes sans fin, les deux pistes comportant des brins qui sont agencés à l'opposé, chaque bloc de moulage possédant une section transversale de configuration substantiellement en L dont chaque branche coopère, en formant un joint étanche, avec une branche d'un bloc de moulage associé dans l'autre piste, lorsque les deux blocs de moulage précités se trouvent dans les brins associés, les blocs de moulage délimitant, dans lesdits brins, une cavité de moulage dans laquelle, en service, du métal en fusion est déversé cependant qu'un mouvement dans la même direction est imprimé aux blocs de moulage, caractérisée par un moyen de guidage (10, 11, 12) qui guide les paires associées de blocs de moulage (1), dans la région située en amont desdits brins opposés, afin de leur imprimer un mouvement relatif dans une première direction (g) perpendiculaire auxdits brins, et dans une seconde direction (d) perpendiculaire auxdits brins et à la première direction (g), jusqu'à ce qu'elles soient en contact.

2. Installation selon la revendication 1, caractérisée par le fait que le moyen de guidage (10, 11, 12) est agencé pour guider des paires associées de blocs de moulage (1), dans la région située en amont desdits brins, en vue d'un mouvement dans la première direction (g) jusqu'à ce que les surfaces d'étanchéité des branches (1a, 1b) des paires de blocs de moulage (1) soient mutuellement opposées, puis en vue d'un mouvement dans la seconde direction (d) jusqu'à ce que lesdites surfaces d'étanchéité soient en contact étanche.

3. Installation selon la revendication 1 ou la revendication 2, caractérisée par le fait que l'une (1a) des branches de chaque bloc de moulage (1) présente un évidement à l'une de ses extrémités; et par le fait que, lorsque chaque paire de blocs de moulage (1) est en contact étanche, l'autre branche (1b) de chaque bloc de moulage (1) est partiellement engagée dans l'évidement de l'autre bloc de moulage (1), et sa face latérale intérieure forme un joint étanche coulissant avec la face latérale (P) de l'évidement.

4. Installation selon l'une quelconque des revendication précédentes, caractérisée par le fait que le moyen de guidage comporte un rail de guidage (10, 11) associé à l'une des pistes sans fin (2), ou à chaque piste sans fin.

5. Installation selon la revendication 4, caractérisée par le fait que le ou chaque rail de guidage (10, 11) s'étend sur ladite région située en amont desdits brins opposés, et sur la longueur desdits brins.

6. Installation selon la revendication 4 ou la revendication 5, caractérisée par le fait que le ou chaque rail de guidage (10, 11) est disposé à l'interieur de la boucle décrite par la piste associée (2).

7. Installation selon l'une quelconque des revendications 4 à 6, caractérisée par le fait que chaque bloc de moulage (1) de la piste ou des pistes (2), auquel un rail de guidage (10, 11) est associé, est pourvu d'une rainure (12) qui reçoit le rail de guidage associé (10, 11).

8. Installation selon l'une quelconque des revendications 4 à 6, caractérisée par le fait que chaque bloc de moulage (1) de la piste ou des pistes (2), auquel un rail de guidage (10, 11) est associé, est muni de galets de guidage (13, 14, 15, 16) qui viennent s'appliquer contre le rail de guidage associé (10, 11).

EP 0 288 626 B1

# Fig.1

# Fig. 2

# Fig. 3

# Fig.4

# Fig.5

# Fig.6

# Fig.7

# Fig.8 (i)

# Fig.8 (ii)

# Fig.8(iii)

# Fig.9